(19)

Europäisches
Patentamt
European
Patent Office
Office européen
des brevets

(11)  **EP 3 876 045 A1**

(12)  **EUROPEAN PATENT APPLICATION**

(43) Date of publication:
08.09.2021 Bulletin 2021/36

(51) Int Cl.:
*G05B 19/042* (2006.01)

(21) Application number: 20020093.9

(22) Date of filing: 03.03.2020

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Linde GmbH
82049 Pullach (DE)**

(72) Inventor: **Voigtländer, Florian
80805 München (DE)**

(74) Representative: **Lu, Jing et al
Linde GmbH
Intellectual Property EMEA
Dr.-Carl-von-Linde-Straße 6-14
82049 Pullach (DE)**

(54) **A METHOD OF EVALUATING OPERATION OF AT LEAST ONE VEHICLE**

(57)    The present invention relates to a method of evaluating operation of at least one vehicle, wherein a set of data (101) determined in the course of at least one trip performed by at least one vehicle is evaluated (102) in dependence of an operation variable, which characterises operation of the at least one vehicle, wherein in dependence of this evaluation (102) influences of factors on the operation variable are evaluated using Shapley values (103), wherein first influence factors correspond to a driving behaviour of the at least one vehicle and wherein second influence factors correspond to properties of the trips performed by the at least one vehicle itself, wherein in dependence of these evaluations (102, 103) a first evaluation variable and a second evaluation variable are determined (104), wherein the first evaluation variable characterises how much driving behaviour during specific trips influences predicted values of the operation variable during these specific trips and wherein the second evaluation variable characterises how much the properties of a specific trip influence predicted values of the operation variable during these specific trips, wherein a correlation between the first evaluation variable and the second evaluation variable is determined (105).

Fig. 1

**Description**

The present invention relates to a method of evaluating operation of at least one vehicle as well as to a computing unit and a computer program for performing the method.

Prior art

In modern industries and large scale industries products are produced in factories or plants which need to be transported from the corresponding production facility e.g. to customers or end users. Corresponding products can be of a variety of different kinds ranging form gases purified in gas processing plants to any kind of technical product like pumps, motors, generators, etc., manufactured in factories.

Transportation of these kinds of products to the corresponding customer can be performed by means of commercial vehicles like trucks, which are operated in regular road traffic on motorways, federal roads and country roads. Fuel costs for this kind of transportation can make up a large amount of the total freight costs of an enterprise. It is desirable to evaluate operation of a fleet of various commercial vehicles, especially to find possibilities of improving operation of the vehicles in order to save fuel, thus minimising transportation costs and environmental effects.

Disclosure of the invention

The present invention relates to a method of evaluating operation of at least one vehicle as well as to a computing unit and a computer program for performing the method with the features of the independent claims. Further advantages and embodiments of the invention will become apparent from the description and the appended figures.

A set of data determined or collected in the course of at least one trip performed by at least one vehicle is evaluated. Particularly, these data represent various different trips performed by various different vehicles. When a vehicle performs a trip, corresponding data related to that very trip is collected, like velocity, acceleration, trip distance, gradients of the covered route, weather information, load of the corresponding vehicle, etc.

In the course of the present method these data are evaluated in a unique way using specific statistical analysis tools, particularly in order to correlate how driving behaviour and properties of the trips itself influence operation of the vehicle. The driving behaviour characterises how a driver operates the vehicle, e.g. with harsh or mild acceleration, with harsh or mild braking, etc. Thus, a driver of the vehicle has a direct influence on the driving behaviour and the corresponding influences on vehicle operation. However, a driver has little or no influences on the trip properties itself. These trip properties particularly characterise properties of roads or terrain or properties of the vehicle itself like vehicle weight, load weight, etc., and thus, usually, cannot be changed, since these properties are particularly given conditions under which the vehicle is to be operated. The present method allows conclusions, whether different driving behaviour could lead to a more or less efficient operation of the vehicle under given conditions or trip properties. In particular, the present method yields a possibility of evaluating driving behaviour and trip properties in relation or in context with each other. Thus, the way how the vehicle is operated is brought into context with the condition under which the vehicle is operated.

In a first step of the present method, the set of data is evaluated in dependence of an operation variable, which characterises operation of the at least one vehicle, particularly efficiency and/or safety of vehicle operation. This operation variable or target variable particularly characterises a property of vehicle operation, which shall be improved or optimised for future operation of vehicles, particularly in order to operate the vehicles in a more cost saving, more efficient, safer and/or more environment friendly way. In particular, specific values of the operation variable for specific performed trips are extracted from the set of data. These specific values are further analysed in order to determine a general relationship or formula for generally predicting the specific value of the operation variable for a specific trip.

In a further step of the present method, influences of factors on the operation variable are evaluated using Shapley values. First influence factors correspond to a driving behaviour of the at least one vehicle and second influence factors correspond to properties of the trips performed by the at least one vehicle itself. Shapley values are a concept of cooperative game theory. In general, Shapley values relate to the situation that multiple players are playing a game and how different coalitions or cooperation of certain players can increase the gain for individual players compared to the players playing without cooperating with each other. Particularly, Shapley values provide conclusions as to how much individual players contribute to an overall cooperation and what gain an individual player can expect. In course of the present invention it has been found to be particularly advantageous to transfer this concept of calculating Shapley values from game theory to the present situation of evaluating operation data of vehicles.

Basis for calculating Shapley values is a set of N items, wherein in game theory these items originally are considered to be players of a game. In the present method, these items are particularly considered to be influence factors on the operation variable. A so called coalition function $v$ maps subsets of items to real numbers, $v:2^N \rightarrow \mathbb{R}$. In game theory, a specific value $v(S)$ of this coalition function characterises a value of a coalition $S$ and in particular an expected sum of payoff each item of the coalition $S$ can obtain. In the present method, a specific value $v(S)$ particularly characterises an effect on the operation variable when a combination S of different influence factors is considered. Shapley values describe distributions of the total gain to the various items when they all collaborate. In general, a Shapley value $\varphi_i(v)$ describes a gain which an item i can get in a coalition $v$. In the present method, Shapley values $\varphi_i(v)$ particularly describe how much individual influence factors contribute to the operation variable in a combination $v$ of several influence factors.

In the course of the present method it has therefore been found that it can be quantised how each single influence factor affects a predicted value of the operation parameter during a specific trip by calculating corresponding Shapley values. In particular, two different categories of influence factors and their respective contributions to the operation variable are evaluated. The first influence factors corresponding to the driving behaviour can for example comprise acceleration, braking, engine speed (rotational), vehicle speed (longitudinal), speeding, cruise control status usage, green band driving, i.e. driving technique for efficiently handling the vehicle power train, engine running stationary, etc. The second influence factors corresponding to trip properties for example comprise total trip distance, gradient driven percentage, vehicle weight, delivered or transported volume, delivered or transported product, number of deliveries, number of stops, time of the trip, e.g. specific day of the week, month or season, etc.

In a further step of the present method a first evaluation variable and a second evaluation variable are determined in dependence of the evaluation of the set of data. The first evaluation variable characterises how much driving behaviour during specific trips influences predicted values of the operation variable during these specific trips. This first evaluation variable particularly represents a driver score or indicator, which quantifies positive or negative contribution of the driving style on predicted values of the operation variable. The second evaluation variable characterises how much the properties of a specific trip influence predicted values of the operation variable during these specific trips. Thus, this second evaluation variable particularly represents a trip score or indicator quantifying positive or negative contribution of the tip properties itself on predicted values of the operation variable.

Due to the additivity of Shapley values these first and second evaluation variables can be defined as scores or indicators which are additive, interpretable and account for the contribution of each influence factor individually, taking into consideration the contributions of all other influence factors.

In a further step of the present method a correlation between the first evaluation variable and the second evaluation variable is determined. In dependence of this correlation of the first and second evaluation variable, optimisation of the operation variable can be performed. Thus, by analysing the correlating evaluation variables it can be concluded how specific amendments of the vehicle driving behaviour can lead to optimised values of the operation variable for future operation of vehicles.

The present method thus allows drawing conclusions on how different operating behaviour affects the operation variable in dependence of specific trip properties. For example, fuel consumption can be considered as operation variable. When the vehicle is operated on a road with many uphill passages with large gradients, high torque is necessary in order to overcome these uphill passages. Thus, when a vehicle is driven with high engine speed (rpm) on such uphill passages, these high engine speed periods do not lead to unnecessary high fuel consumption but are simply mandatory.

On the other hand, if the driver frequently accelerates the vehicle rather strongly on flat or downhill terrain, these frequent acceleration periods are not mandatory and could indeed lead to unnecessary high fuel consumption.

In order to determine correlations between the evaluation variables, the values of the second evaluation variable can e.g. be divided in different categories, sections or intervals, wherein these different categories represent different kinds of trips with different trip properties. These different categories can for example represent sophisticated trips with long distances over a terrain with many gradients or modest trips with short distances in flat terrain. The corresponding values of the first evaluation variable in these different categories particularly represent different driving styles for similar trips with comparable properties. Thus, by this kind of correlation conclusions, can be made on how the operation parameter is influenced when the similar trips are performed with different driving styles or driving behaviour.

The present method therefore yields a possibility to evaluate data collected during a variety of trips performed with a variety of vehicles using Shapley values in order to learn how different driving behaviour influences an operation parameter to be optimised during specific kinds of trips. In the course of the present invention it has been found that Shapley values and their way of evaluating contributions of individual items in a multitude of items to an overall gain are particularly advantageous in order to evaluate the contributions of individual factors of a multitude of factors influencing an operation parameter of vehicles to be optimised.

The present method can recognise patterns in driving styles within each trip context and can predict the driver related operation variable, e.g. fuel consumption. Based on an additional evaluation of these predictions, driving styles and trip contexts can be expressed as two single continuous scores. The method allows identifying the contribution of each individual input feature on the predicted operation variable, e.g. fuel consumption per distance or per trip. Thus, transparency of improvement potential can be established when communicating to drivers of the vehicles. The method can be dynamically retrained at any desired frequency and thus can automatically learn over time.

The present method is particularly advantageous for a fleet of vehicles performing certain tasks in the regular road traffic, e.g. on motorways, federal roads, country roads, etc. Data collected by the various vehicles can be evaluated to find possibilities of improving operation variables like fuel consumption, thus minimising costs and environmental effects. The present method is particularly advantageous for a fleet of commercial vehicles like trucks especially for transportation of products from production facilities to customers. Products of that kind can e.g. be gases purified in gas processing plants or technical product like motors, generators, etc., manufactured in production factories. The present method can for example also be applied in the field of passenger transportation, e.g. for a fleet of busses or taxis. In general, the present method can particularly be applied to industries or environments where context related individual driver scoring, evaluation or training is desirable, for example logistics, insurance telematics tariffs, etc.

According to a preferred embodiment the set of data is evaluated in order to predict values of the operation variable for specific trips. Particularly, for each performed trip the corresponding value of the operation variable is determined. These different values of the operation variable are evaluated in order to determine a general relationship or formula of the operation variable in dependence of one or several characterising parameters, e.g. of a duration or length of a trip. This general relationship particularly does not specifically account for influence factors related to driving behaviour or trip properties, but yield a way of predicting averaged values of the operating variable. In the subsequent evaluation the data can be evaluated with respect to how these kinds of influence factors influence these generally predicted values.

According to a particularly preferred embodiment, the set of data is evaluated using machine learning. Machine learning techniques, algorithms and models particularly perform specific tasks without using explicit instructions, but rather relying on patterns and inference. Machine learning algorithms can build a mathematical model based on sample data, in order to make predictions. Thus, a machine learning algorithm is applied to the present set of data particularly in order to recognise patterns in the operation variable and to predict values of the operation variable for specific trips. Therefore, the present method can recognise patterns in driving styles within each trip context and predict the operation variable like a driver related fuel consumption accordingly using supervised machine learning.

Particularly advantageous, the set of data is evaluated using a gradient boosting regression tree model. A gradient boosting regression tree model (also referred to as gradient boosting decision tree model or simply as gradient boosting) is a machine learning algorithm using decision trees in order to predict a target variable. In particular, in the course of the gradient boosting regression tree model for each performed trip the corresponding value of the operation variable is determined. In dependence of these operation variable values an average value is determined. Then, residual values between the average and the different operation variable values are determined. A decision tree is determined for predicting the residual values as value for the operation variable, wherein different branches of this tree corresponds to values of the trips being larger or smaller than a threshold. A so called hyperparameter can expediently be introduced, wherein when making a prediction, each residual is multiplied by this hyperparameter. Differences between the actual operation variable values and these predicted values are calculated as new residuals and a new decision tree is determined with these residuals. These steps of calculating residuals and determining decisions trees are iteratively repeated e.g. until predictions with a variance lower than a predetermined threshold can be made. Particularly, in order to guarantee consistency for some features, e.g. total trip distance, partial dependencies can be enforced on the prediction to be monotone decreasing or increasing. The hyperparameters of this prediction model are especially automatically tuned using Bayesian optimisation.

Preferably, the first evaluation variable is determined as a sum or partial sum of different Shapley values of different first influence factors. The second evaluation variable is preferably determined as a sum or partial sum of different Shapley values of different second influence factors. Due to the additivity of Shapley values, the first and second evaluation variables can each be determined as the partial sum of Shapley values over all features in the corresponding set of features or influence factors, particularly separately and individually. Thus, these definitions of evaluation variable is in the space of Shapley transformed features and not in its original scale any longer, which are additive, interpretable and account for the contribution of each feature or influence factor individually, taking into consideration the contributions of all other features already.

According to a particularly advantageous embodiment, the correlation between the first evaluation variable and the second evaluation variable is determined using quantiles of the first evaluation variable and the second evaluation variable. In statistics, quantiles are threshold values that divide a range of values into different intervals with given properties. For example, quantiles can be used to divide a finite set of values into subsets of equal sizes or at least essentially equal sizes. Quantiles can particularly be used to divide the evaluation variables into different subsets, intervals, segments or categories. In each of these different subsets, dependencies or correlation between the evaluation variables can be evaluated. Particularly, quantile based norming methods can be applied, e.g. such that in these different subsets, evaluation variables can individually be normed.

The present method particularly introduces additional statistical quantile based norming methods, which can ensure that the first evaluation variable or driving style score is measured in relation to the second evaluation variable or trip context score. Normed first evaluation variables or normed driver scores are particularly comparable across different driving contexts during trips, regions and countries. A scatter plot of the first and second evaluation variable can be used to derive quantile based norming curves, which can serve as reference points to norm the first evaluation variable in different microsegments of the second evaluation variable.

Advantageously, the second evaluation variable is divided into a number of intervals using quantiles, wherein each interval represents a predetermined number of specific trips. Each value of the second evaluation variable particularly represents one specific trip. Thus, the total number of values of the second evaluation variable is divided by quantile values into the given number of intervals or quantile intervals or quantile bands, such that each interval comprise the same number or at least essentially the same number of specific values of the second evaluation variable and thus the same or at least essentially the same number of specific trips.

Thus, each interval particularly represents trips with the same or at least with comparable properties. Each interval can therefore be seen as a specific category of a trip. With the second evaluation variable characterising how much the properties of specific trips influence predicted values of the operation variable, these categories can for example range from trips with rather small influence on the operation variable, like modest trips with short distances in flat terrain, to trips with rather huge influence on the operation variable, e.g. sophisticated trips with long distances over a terrain with many gradients.

Preferably, for each of the different intervals a predetermined number of especially equidistant quantiles of the first evaluation variable is determined. Thus, each interval, i.e. each different trip category, is further divided into the predetermined number of subsets, each subset representing a specific driving behaviour. The driving style score is thus brought into relation or into context with the trip context score. It can thus be evaluated, how the operation variable changes, when the same trip or at least when comparable trips are performed with different diving behaviour

Advantageously, for each interval corrected first evaluation variables are determined as minimal distances of values of the first evaluation variable to the quantiles of the corresponding interval. Thus, these corrected first evaluation variables are normed by the trip category and expediently represent a normed and representative score for the driving behaviour influencing the operation variable brought in context with the second evaluation variable, i.e. in context with the trip properties.

Therefore, according to a particularly advantageous embodiment, the present method utilises a unique combination of specific statistical analysis tools in order to correlate how driving behaviour and properties of trips influence operation of the vehicle. Particularly preferred, the present method uses a combination of machine learning, particularly gradient boosting or gradient boosting regression tree model, Shapley values derived from game theory, and quantile values, particularly statistical quantile based norming. This unique combination of statistical tools yields a particularly advantageous method of analysing data collected by a fleet of vehicles in order to optimise operation of the vehicles.

Preferably, the operation variable is fuel consumption per distance. It can thus expediently be evaluated how driving behaviour influences fuel consumption on similar trips. Drivers of the fleet can thus be advised to adapt certain aspects of their driving behaviour in order reduce fuel consumption and transportation costs. Alternatively or additionally, the operation variable can preferably be safety related, thus allowing conclusions on how specific driving behaviour affects safety e.g. of the vehicles or transported freight.

A computing unit according to the invention is configured, in particular by a computer program, to carry out an inventive method.

The implementation of the invention in the form of software is advantageous because this allows particularly low costs, especially if an executing processing unit is still being used for other tasks and therefore is present anyway. Suitable media for providing the computer program are in particular diskettes, hard drives, flash memory, EEPROM, CD-ROMs, DVDs etc. Downloading a program via computer networks (Internet, intranet, etc.) is possible.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which

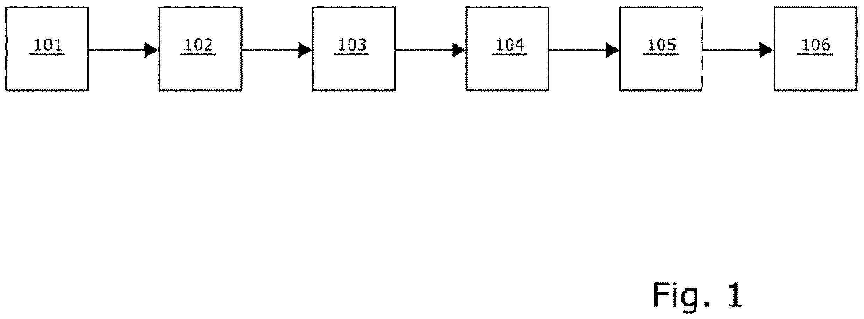

Fig. 1     schematically shows a preferred embodiment of the method according to the present invention as a block diagram.

Detailed description

Fig. 1 schematically shows a preferred embodiment of the method according to the present invention as a block diagram.

In the present example different gases like oxygen, nitrogen, carbon dioxide and the like are purified in a gas processing plant, for example by means of air separation. These different gases are transported from the gas processing plant to customers by a fleet of commercial vehicles. Fuel consumption of these vehicles shall be optimised in order to save fuel and reduce costs. For this purpose, operation of the vehicles is evaluated by means of said preferred embodiment of the method according to the present invention.

In step 101 data is determined during trips, when gas is transported by the different vehicles from the gas processing plant to customers. For example each vehicle can collect corresponding data when performing a trip. This data can comprise driving behaviour related data like an engine speed over the entire time of the trip and correspondingly acceleration and braking manoeuvres during the trip. The collected data can also comprise trip related data, e.g. terrain information like gradients or the information about the time of the trip like day of the week, month and season. Further the collected data can comprise freight related data, especially the weight of the transported data and thus the weight of the vehicle.

The corresponding data can be stored in a computing unit inside the vehicle and can be transmitted from the vehicle to an external computing unit, for example to a server or a system of distant computing units e.g. in the sense of so called "cloud computing". In this computing unit, correspondingly collected data of each vehicle of the fleet is stored and evaluated using a preferred embodiment of the method according to the present invention, as will be explained hereafter.

In step 102 the set of data is evaluated using machine learning, particularly using a gradient boosting regression tree model, in dependence of an operation variable, expediently fuel consumption per distance. Particularly, the set of data is evaluated in order to predict values of the fuel consumption for specific trips.

By means of the gradient boosting regression tree model, an algorithm is applied to the set of data extracting the fuel consumption (e.g. in litres per 100 km) for each trip. Average fuel consumption is determined from these different fuel consumption values. Residual values between the average fuel consumption and the different fuel consumption values are determined. A decision tree is determined for predicting this fuel consumption in dependence of a so called hyperparameter. Differences between actual and predicted fuel consumption are determined as new residuals and a new decision tree is determined. These steps of determining residuals and decisions trees are iteratively repeated e.g. until fuel consumption can be predicted with a predetermined variance. In order to guarantee consistency for some features, e.g. total trip distance, partial dependencies are enforced on the prediction to be monotone decreasing or increasing. The hyperparameters of this prediction model are automatically tuned using Bayesian optimisation.

Particularly, the gradient boosting regression tree model is trained on the target variable fuel consumption per distance (in litres per 100 km) using two sets of features or influence factors. A first set of features relates to driving style or driving behaviour, e.g. acceleration, braking, engine speed, vehicle speed, cruise control status usage, green band driving, engine running stationary, etc. A second set of features relates to a trip context, e.g.

total trip distance, gradient driven percentage, vehicle weight, delivered volume, number of deliveries, number of stops, average trip speed, day of the week, vehicle id, delivered product, month, season etc.

In step 103, in dependence of this evaluation of step 102, influences of the above referenced factors or features on the operation variable, i.e. on fuel consumption, are evaluated using Shapley values. First influence factors correspond to the driving behaviour and second influence factors correspond to the trip context or properties of the trips.

Shapley values in game theory generally describe a gain which a player can get when in a coalition with other players. This concept is transferred to the evaluation of vehicle operation data. Particularly, Shapley values are calculated, which describe how much individual influence factors contribute to the operation variable in a combination of several influence factors. For example, for each of the above referenced features or influence factors, a corresponding Shapley value is determined, which quantifies how much the corresponding feature contributes to the predicted fuel consumption.

For example, a Shapley value of "+4" for terrain gradient means that the slopes, i.e. the uphill and downhill passages in the terrain of a specific trip lead to an increased fuel consumption, which is 4 litres per 100 km larger than the predicted average fuel consumption of a typical trip.

A Shapley value of "-2" e.g. for braking means that the specifically performed braking manoeuvres during a specific trip lead to a reduction fuel consumption, which is of 2 litres per 100 km lower than the predicted average fuel consumption of a typical trip.

In step 104, a first evaluation variable and a second evaluation variable are determined in dependence of these evaluations of step 102 and 103. The first evaluation variable characterises how much driving behaviour during specific trips influences predicted values of fuel consumption during these specific trips. The second evaluation variable characterises how much the properties of a specific trip influence predicted values of fuel consumption during these specific trips.

In particular, this first evaluation variable or driver score is determined as partial sum of the Shapley values of all corresponding driving behaviour related influence factors. Accordingly, the second evaluation variable or trip score is determined as partial sum of the Shapley values of all corresponding trip related influence factors. Due to the additivity of the Shapley values, the first evaluation variable or driver score and the second evaluation variable or trip score are defined as the partial sums of Shapley values over all features in the corresponding feature sets separately. Because of the property of Shapley values, these two scores can be interpreted directly as positive or negative contributions of driving style related or trip context related realisations of the features on predicted fuel consumption. Thus, these scores are based in the space of Shapley transformed features (and not in the original scale), which are additive, interpretable and account for the contribution of each feature individually, taking into consideration the contributions of all other features already.

In step 105, a correlation between the first evaluation variable and the second evaluation variable is determined, particularly using quantiles of the first evaluation variable and the second evaluation variable.

For this purpose, the first evaluation variable or drive score can be plotted in dependence of the second evaluation variable or trip score. This trip score/driver score scatter plot is used to derive quantile based norming curves which serve as reference points to norm driver scores in each trip score microsegment.

The second evaluation variable or trip score is divided into a number of intervals using quantiles, wherein each interval represents a predetermined number of specific trips. For example, the second evaluation variable or trip scores are categorised into 11 categories using quantile banding. Hence, each trip category contains approximately the same number of trips. Trip category "0" for example represents a class with a highest Shapley sum over the trip features. Category "10" for example characterises a class with a lowest Shapley sum over the trip features.

For each of the different intervals a predetermined number of quantiles of the first evaluation variable or drive score is determined. For example, in each of the trip categories from "0" to "10", a predetermined number of 10 equidistant empirical quantiles of the driver scores distribution are determined. For example, category "0" can represent worst scores with minimum fuel efficiency. Category "10" can e.g. represent best scores with a maximum fuel efficiency. Those conditional quantiles can be denoted as $q(a|x)$, wherein a is a particular quantile value and x a particular trip score value or value of the second evaluation variable.

The conditional quantiles are be checked and if necessary, corrected for monotonicity along the two dimensions according to the following conditions:

$$M1: \; q(a|x) \leq q(b|x),$$

for $a \leq b$, for every x

$$M2: \; q(a|x) \leq q(a|y),$$

for $x \leq y$, for every a

For condition M2, isotonic regression smoothing can be applied. For M1, a simple rule based approach can be used.

For each interval corrected first evaluation variables are determined as minimal distances of values of the first evaluation variable to the quantiles of the corresponding interval. This corrected first evaluation variables or final "fair" driver score, normed by the trip category (i.e. trip efficiency class), is thus derived by the minimal distance of the raw driver score (i.e. the driver Shapley sum) to the empirical and potentially corrected quantile values given each trip category. These corrected first evaluation variables or final driver scores are thus brought into context with the trip scores or trip categories.

In step 106 these correlated first and second evaluation variable are used in order to optimise fuel consumption for future trips.

For example, driving behaviour of a first driver can be evaluated for a fuel efficient trip of category "10". For example, this trip can have a trip score or second evaluation variable of "-2", i.e. the trip features have an overall contribution of 2 litres per 100 km lower than the predicted average fuel consumption. The driver score or first evaluation variable can e.g. be "+1", i.e. the driving style features of the first driver had an overall contrition of 1 litre per 100 km higher than the predicted average fuel consumption. The estimated median (i.e. the 2-quantile) of the driver score of all drivers with this specific trip is e.g. "-1". That is, the drivers usually achieve a fuel consumption 1 litre per 100 km lower than the predicted average fuel consumption. The first driver can thus be advised to adjust the driving behaviour to reduce fuel consumption.

For example, driving behaviour of a second driver can be evaluated for a rather fuel inefficient trip of category "0". For example, this trip can have a trip score or second evaluation variable of "+8", i.e. the trip features have an overall contribution of 8 litres per 100 km higher than the predicted average fuel consumption. As in the previous case, the driver score or first evaluation variable in this example can also be "+1", i.e. the driving style features of the second first driver had an overall contribution of 1 litre per 100 km higher than the predicted average fuel consumption. However, considering that this trip is much more difficult than the above referenced trip, the driver score of this second driver in context with the trip score is to be judged more efficient than the driver score of the first driver. Thus, the second driver does not need to adjust the driving behaviour.

The present algorithm thus recognises patterns in driving styles within each trip context and predicts the driver related fuel consumption accordingly using supervised machine learning. Based on an additional explainer model (Shapley values) on those predictions, driving styles and trip contexts are expressed as two single continuous scores. The method further introduces additional statistical quantile based norming methods, which ensure driving style score is measured in relation to the trip context score. Those normed driver scores are thus comparable across different driving contexts during the trips, regions and countries. The explainer model allows identifying the contribution of each individual input feature on the predicted fuel consumption per distance and thus is vital in establishing transparency of improvement potential when communicating to the drivers. The method is ready-made to be dynamically retrained at any desired frequency and thus can automatically learn over time.

**Claims**

1. A method of evaluating operation of at least one vehicle, comprising the steps of:

   evaluating (102), in dependence of an operation variable, which characterises operation of at least one vehicle, a set of data (101) determined in the course of at least one trip performed by the at least one vehicle;
   evaluating (103), using Shapley values, in dependence of the evaluation (102) of the set of data (101), influences of factors on the operation variable, wherein first influence factors correspond to a driving behaviour of the at least one vehicle and wherein second influence factors correspond to properties of the trips performed by the at least one vehicle itself;
   determining (104) in dependence of these evaluations (102, 103) a first evaluation variable and a second evaluation, wherein the first evaluation variable characterises how much driving behaviour during specific trips influences predicted values of the operation variable during these specific trips, and wherein the second evaluation variable characterises how much the properties of a specific trip influence predicted values of the operation variable during these specific trips; and
   determining (105) a correlation between the first evaluation variable and the second evaluation variable.

2. The method according to claim 1, further comprising predicting values of the operation variable for specific trips in dependence of the set of data (102).

3. The method according to claim 1 or 2, further comprising using machine learning methods for evaluating the set of data (102).

4. The method according to claim 3, further comprising using a gradient boosting regression tree model for evaluating the set of data (102).

5. The method according to any one of the preceding claims, further comprising determining the first evaluation variable as a sum of different Shapley values of different first influence factors; and further comprising determining the second evaluation variable as a sum of different Shapley values of different second influence factors (104).

6. The method according to any one of the preceding claims, further comprising using quantiles of the first evaluation variable and the second evaluation variable for determining the correlation between the first evaluation variable and the second evaluation variable (105).

7. The method of claim 6, further comprising dividing the second evaluation variable into a number of intervals using quantiles, wherein each interval represents a predetermined number of specific trips (105).

8. The method of claim 7, further comprising determining for each of the different intervals a predetermined number of quantiles of the first evaluation variable (105).

9. The method of claim 8, further comprising determining for each interval corrected first evaluation variables as minimal distances of values of the first evaluation variable to the quantiles of the corresponding interval (105).

10. The method of any one of the preceding claims, wherein the operation variable is fuel consumption per distance or per trip.

11. The method of any one of the preceding claims, wherein the at least one vehicle is at least one commercial vehicle, especially used for transporting products from production facilities to customers.

12. Computing unit which is configured to perform all steps of a method according to any one of the preceding claims.

13. A computer program which causes a computing unit to perform all steps of a method according to any one of claims 1 to 11 when it is executed on the computing unit.

14. A machine-readable storage medium having stored thereon a computer program of claim 13.

Fig. 1

Europäisches
Patentamt

European
Patent Office

Office européen
des brevets

## EUROPEAN SEARCH REPORT

Application Number

EP 20 02 0093

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU JUNSHI ET AL: "A machine learning approach capturing the effects of driving behaviour and driver characteristics on trip-level emissions", ATMOSPHERIC ENVIRONMENT, PERGAMON, GB, vol. 224, 27 January 2020 (2020-01-27), XP086114287, ISSN: 1352-2310, DOI: 10.1016/J.ATMOSENV.2020.117311 [retrieved on 2020-01-27] * the whole document * ----- | 1-14 | INV. G05B19/042 |

TECHNICAL FIELDS SEARCHED (IPC)

G05B

The present search report has been drawn up for all claims

| Place of search | Date of completion of the search | Examiner |
|---|---|---|
| Munich | 24 July 2020 | Marrone, Fabrizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)